# EUROPÄISCHE PATENTSCHRIFT

(11) **EP 3 857 081 B1**
(45) Veröffentlichungstag und Bekanntmachung des Hinweises auf die Patenterteilung: **04.03.2026**
(21) Anmeldenummer: 19770133.7
(22) Anmeldetag: 24.09.2019
(51) Int. Cl.: F01D 5/00, F16C 17/26, F01D 25/16, F16C 19/18, F16C 19/54, F16C 33/60, F16C 35/077, F16C 35/02

(54) **ABGASTURBOLADER MIT EINEM LAGERBAUGRUPPENMODUL**
EXHAUST-GAS TURBOCHARGER HAVING A BEARING ASSEMBLIES MODULE
TURBOCOMPRESSEUR À GAZ D'ÉCHAPPEMENT DOTÉ D'UN MODULE DE PALIER

(30) Priorität: 24.09.2018 EP 18196264
(43) Veröffentlichungstag der Anmeldung: 04.08.2021
(73) Patentinhaber: Accelleron Switzerland Ltd., 5400 Baden (CH)
(72) Erfinder: MAURER, Florian, 8050 Zürich (CH); KREIENKAMP, Christian, 79713 Bad Säckingen (DE); AMMANN, Bruno, 5000 Aarau (CH)
(74) Vertreter: Zimmermann & Partner Patentanwälte mbB
(86) Internationale Anmeldenummer: PCT/EP2019/075737
(87) Internationale Veröffentlichungsnummer: WO 2020/064750

(56) Entgegenhaltungen:
- EP-A2- 1 253 307
- CN-A- 101 568 736
- DE-A1- 102012 211 891
- DE-A1- 102014 201 081
- DE-C1- 4 021 325
- DE-T5- 112013 002 332
- US-A1- 2015 233 382
- US-B2- 8 740 465
- US-B2- 9 879 689

## Beschreibung

### TECHNISCHES GEBIET DER ERFINDUNG

Die Erfindung betrifft einen Abgasturbolader, welcher ein zwischen einem Verdichter und einer Turbine angeordnetes Lager aufweist, in welchem die Welle des Abgasturboladers gelagert ist.

### STAND DER TECHNIK

Gleitlager sind aufgrund ihrer Robustheit und ihres einfachen Aufbaus die am Häufigsten in der Industrie verbauten Lager. Wälzlager bieten allerdings in vielerlei Hinsicht Vorteile. Die Lagerreibung und somit die Verlustleistung beträgt bei gleicher Anwendung nur einen Bruchteil derer von Gleitlagern. Durch die geringe Lagerreibung kann das Transientverhalten von Turbomaschinen deutlich verbessert werden (Lastaufnahme). Ebenso kann der Ölverbrauch zur Schmierung und Kühlung bei der Verwendung von Wälzlagern auf einen Bruchteil der für Gleitlager benötigten Menge reduziert werden.

Dennoch sind insbesondere Abgasturbolader üblicherweise mit hydrodynamischen Gleitlagern ausgerüstet, die je nach der Richtung der Lastaufnahme in zwei Typen unterteilt werden.

Ein erster Typ eines derartigen Gleitlagers ist ein Radiallager. Radiallager, meist zwei an der Zahl pro Welle, nehmen die Radialkräfte des sich drehenden Rotors, bestehend aus den Hauptkomponenten Turbinenrad, Welle und Verdichterrad, auf und stabilisieren diesen Rotor. Zwei ölgefüllte Ringspalte unterschiedlicher Dimensionen pro Radiallager teilen sich dabei die Funktionen Stabilisieren und Dämpfen. Ein Radiallager kann je nach Ausführung angetrieben durch die Bewegung der Welle selbst rotieren oder rotatorisch fixiert sein. Kräfte, die durch das Radiallager aufgenommen werden, sind unter anderem Gewichtskräfte und Unwuchtkräfte.

Ein zweiter Typ eines derartigen Gleitlagers ist ein Axiallager. Ein Axiallager nimmt Schubbeanspruchung auf, die auf den Rotor wirkt. Globaler, auf den Rotor wirkender Schub entsteht durch unterschiedliche Drücke, die an verschiedenen Flächen hauptsächlich von Verdichter und Turbine wirken. Die Kraftaufnahmefähigkeit eines hydrodynamischen Axiallagers entsteht durch Schmieröl, welches durch die Rotation der Welle in sich verengende, keilförmige Bereiche gedrückt wird, was Druckaufbau zur Folge hat, der die Gegenkraft zum Schub darstellt.

Turbolader, die einen wälzgelagerten Rotor aufweisen, konnten bisher aufgrund diverser technischer Herausforderungen nur in wenigen Fällen Serienreife erlangen. Beispiele hierfür finden sich in der Automobilindustrie, wobei die dort zur Auslegung genutzte Betriebsdauer von umgerechnet ca. 2.900 h (200.000 km bei 70 km/h Durchschnittsgeschwindigkeit) merklich unterhalb derer anderer Industriebereiche liegt wie zum Beispiel Bergbau, Metall-, Maschinenindustrie oder Energiewirtschaft. Werden Betriebszeiten über der von regulär ausgelegten Fahrzeugen im Strassenverkehr gefordert sind Maschinen regelmässigen Servicearbeiten zu unterziehen, wie beispielsweise einer Inspektion, einer Reinigung und einem Austausch von Ersatzteilen. Hierzu wird der jeweilige Abgasturbolader demontiert und nach durchgeführter Servicearbeit wieder zusammengesetzt. Im Unterschied dazu werden in der Automobilindustrie eingesetzte Abgasturbolader solange betrieben, bis es zu einem Schaden kommt, und dann komplett ausgetauscht. Dementsprechend sind eine Demontage und eine Erneuerung von Verschleißteilen nicht vorgesehen.

Turbolader im Automobilbereich werden aufgrund des enormen Preisdrucks aus möglichst wenigen Teilen aufgebaut, was Beschaffungskosten und Durchlaufzeit bei der Montage spart. Modulare Systeme finden kaum Anwendung, da jedes Bauteil möglichst kostengünstig für eine spezielle Anwendung gestaltet und in hohen Stückzahlen gefertigt wird. In anderen Industriezweigen ist dem gegenüber eine hohe Flexibilität erforderlich. Für Turbolader beispielsweise in der Energiewirtschaft werden thermodynamisches Anpassmaterial auf Verdichter- und Turbinenseite für Rotor sowie Stator, unterschiedliche Lufteintritts- und Austrittsgehäuse, diverse Möglichkeiten für Wasser- und Ölanschlüsse u.v.m. verlangt.

Die Flexibilität Lagertypen bei gleichem Turbolader zu tauschen, war bisher allerdings nicht gegeben. Das Design bisher bekannter wälz- und gleitgelagerter Turbolader unterscheidet sich deutlich.

Aus der US 9,879,689 B2 ist ein Abgasturbolader bekannt, der ein zwischen einem Verdichter und einer Turbine angeordnetes, für eine Lagerung einer Welle ausgebildetes Lager enthält. Das Lager weist ein Lagergehäuse mit einem Aufnahmeraum auf, in welchen ein Lagerbaugruppenmodul eingebaut ist. Der Aufnahmeraum hat eine Schnittstelle, die zur Kontaktierung mit dem Lagerflansch des in den Aufnahmeraum eingebauten Lagerbaugruppenmoduls ausgebildet ist. Die Schnittstelle ist zur Verbindung eines durch das Lagergehäuse geführten Ölkanals mit einem durch einen Lagerflansch des Lagerbaugruppenmoduls geführten Ölkanal ausgebildet.

Weitere Abgasturbolader, die ein zwischen einem Verdichter und einer Turbine angeordnetes, für eine Lagerung einer Welle ausgebildetes Lager aufweisen, sind aus der US 2015/0233382 A1, der DE 10 2012 211 891 A1, der EP 1 253 307 A2, der DE 40 21 325 C1, der DE 11 2013 002 332 T5, der CN 101568736 A und der US 8,740,465 B2 bekannt.

Die DE 10 2014 201 081 beschreibt einen Abgasturbolader mit einem Lagergehäuse, in dem eine Turboladerwelle über mindestens ein Kugellager gelagert ist, wobei das Kugellager einen Lageraußenring aufweist. Um einen derartigen Abgasturbolader bezüglich seines akustischen Verhaltens zu optimieren, ist vorgesehen, dass der Lageraußenring frei drehbar in dem Lagergehäuse gehalten und an seinem einen axialen Ende über ein Axiallager abgestützt ist.

### AUFGABE DER ERFINDUNG

Die Aufgabe der Erfindung besteht darin, einen einfach aufgebauten und robusten Abgasturbolader anzugeben, dessen Flexibilität erhöht ist.

### KURZE DARSTELLUNG DER ERFINDUNG

Diese Aufgabe wird durch einen Abgasturbolader gelöst, welcher ein zwischen einem Verdichter und einer Turbine angeordnetes, für eine Lagerung einer Welle ausgebildetes modulares Lager enthält, wobei das Lager ein Lagergehäuse mit einem Aufnahmeraum aufweist, wobei in den Aufnahmeraum ein Lagerbaugruppenmodul eingebaut, am Lagergehäuse befestigt und zerstörungsfrei ausbaubar ist, wobei der Aufnahmeraum derart dimensioniert ist, dass wahlweise ein Wälzlager aufweisendes Lagerbaugruppenmodul oder ein Gleitlager aufweisendes Lagerbaugruppenmodul einbaubar ist, wobei der Aufnahmeraum eine Schnittstelle aufweist, die zur Kontaktierung mit dem Lagerflansch des in den Aufnahmeraum eingesetzten Lagerbaugruppenmoduls ausgebildet ist und wobei die Schnittstelle zur Verbindung eines durch das Lagergehäuse geführten Ölkanals mit einem oder mehreren durch einen Lagerflansch des Lagerbaugruppenmoduls geführten Ölkanälen ausgebildet ist, und wobei der Aufnahmeraum eine Stufe aufweist, welche eine im Wesentlichen in radialer Richtung verlaufende Anschlagfläche hat, die zum Verdichter hin weist, so dass sie einen axialen Anschlag für ein verdichterseitig eingesetztes Lagerbaugruppenmodul definiert, und wobei die Stufe den Aufnahmeraum in einen verdichterseitigen, in Radialrichtung größeren ersten Aufnahmeraum-Abschnitt und einen turbinenseitigen, in Radialrichtung kleineren zweiten Aufnahmeraum-Abschnitt unterteilt, wobei der erste und zweite Aufnahmeraum-Abschnitt axial benachbart zueinander angeordnet sind und die Stufe zwischen dem ersten und dem zweiten Aufnahmeraum-Abschnitt angeordnet ist, und wobei der Ölkanal oder einer der Ölkanäle mit einem Ringkanal verbunden ist, der auf einer verdichterseitigen Stirnseite des Lagerbaugruppenmoduls angeordnet ist.

Die Vorteile der Erfindung bestehen insbesondere darin, dass ein Abgasturbolader mit den im Anspruch 1 angegebenen Merkmalen flexibel nutzbar ist. Ist beispielsweise in den Aufnahmeraum des Lagergehäuses des Abgasturboladers ein Gleitlager aufweisendes Lagerbaugruppenmodul eingesetzt, dann kann dieses zerstörungsfrei aus dem Aufnahmeraum ausgebaut werden und beispielsweise durch ein Wälzlager aufweisendes Lagerbaugruppenmodul ersetzt werden. Des Weiteren besteht die Möglichkeit, ein in den Aufnahmeraum des Lagergehäuses des Abgasturboladers eingesetztes, Wälzlager aufweisendes Lagerbaugruppenmodul zerstörungsfrei aus dem Aufnahmeraum auszubauen, einem Wartungsvorgang zu unterwerfen und dann wieder in den Aufnahmeraum einzubauen.

Gemäß einer Ausführungsform der Erfindung stimmen die Bauform und die Außenmaße eines in den Aufnahmeraum einsetzbaren oder eingesetzten, Wälzlager aufweisenden Lagerbaugruppenmoduls mit der Bauform und den Außenmaßen des in den Aufnahmeraum eingesetzten oder einsetzbaren, Gleitlager aufweisenden Lagerbaugruppenmoduls soweit überein, dass das Wälzlager aufweisende Lagerbaugruppenmodul und das Gleitlager aufweisende Lagerbaugruppenmodul austauschbar in den Aufnahmeraum eingesetzt werden können.

Gemäß einer Ausführungsform der Erfindung weist das Lagerbaugruppenmodul eine Wälzlagerkartusche, einen Lagerflansch, einen Abschlussdeckel, ein Ölfangblech und eine Verdrehsicherung auf, wobei die Wälzlagerkartusche ein Wälzlager aufweist, zu welchem ein Außenring, ein Innenring und zwischen dem Außenring und dem Innenring angeordnete Wälzkörper gehören.

Gemäß einer Ausführungsform der Erfindung weist der Innenring zwei Innenringteile auf und der turbinenseitige Außenrand des turbinenseitig angeordneten Innenringteils ist relativ zum turbinenseitigen Außenrand des Außenringes in Axialrichtung nach außen verlängert.

Gemäß einer Ausführungsform der Erfindung dient das Ölfangblech bei der Demontage des Turboladers als axiales Gegenlager für den Innenring und ein axialer Spalt zwischen dem Innenring und dem Ölfangblech ist kleiner als die axiale Beweglichkeit der turbinenseitigen Wälzkörper in den Laufrillen des Wälzlagers in unverspanntem Zustand der Lagerung.

Gemäß einer Ausführungsform der Erfindung weist das Ölfangblech zwei Rippen auf und der tangentiale Rand einer dieser Rippen dient im Betrieb des Lagerbaugruppenmoduls als Ölhobel für eingebrachtes Kühlöl.

Gemäß einer Ausführungsform der Erfindung ist der Durchmesser des Ölfangblechs an dessen radial äußerem Rand gegenüber der Gegenfläche des Lagerflansches zur Bildung einer Ablaufrinne vergrößert.

Gemäß einer Ausführungsform der Erfindung ist das Ölfangblech am Lagerflansch mittels Befestigungselementen befestigt und am Lagerflansch mittels dieser Befestigungselemente zentrierbar.

Gemäß einer Ausführungsform der Erfindung weist der Abgasturbolader eine zur Ölversorgung eines Quetschöldämpfers des Wälzlagers ausgebildete, in der Wälzlagerkartusche angeordnete Ringnut auf.

Gemäß einer Ausführungsform der Erfindung dient der Abschlussdeckel als axialer Anschlag zum Aufnehmen einer in Axialrichtung in Richtung des Verdichters wirkenden Schubbelastung.

Gemäß einer Ausführungsform der Erfindung besteht der Abschlussdeckel aus Buntmetall und/oder er weist Aussparungen auf.

Gemäß einer Ausführungsform der Erfindung ist der Aufnahmeraum derart gestaltet, dass das Lagerbaugruppenmoduls axial von der Verdichterseite her ein- und ausbaubar ist.

Gemäß einer Ausführungsform der Erfindung weist der Aufnahmeraum eine Stufe auf. Die Stufe weist vorzugsweise eine im Wesentlichen in radialer Richtung verlaufende Anschlagfläche auf. Die Anschlagfläche weist vorzugsweise zum Verdichter hin, so dass sie einen axialen Anschlag für ein verdichterseitig eingesetzes Lagerbaugruppenmodul definiert.

Gemäß einer Ausführungsform der Erfindung ist die Stufe im mittleren Teil der Axialerstreckung des Aufnahmeraums angeordnet, beispielsweise in einem Abstand von dem Verdichterrad, der 25% bis 75% des Abstands zwischen dem Turbinenrad und dem Verdichterrad beträgt.

Gemäß einer Ausführungsform der Erfindung ist unterteilt die Stufe den Aufnahmeraum vorzugsweise in einen in Radialrichtung größeren ersten Aufnahmeraum-Abschnitt und einen in Radialrichtung kleineren zweiten Aufnahmeraum-Abschnitt, wobei der erste und zweite Aufnahmeraum-Abschnitt axial benachbart zueinander angeordnet sind und die Stufe zwischen dem ersten und zweiten Aufnahmeraum-Abschnitt angeordnet ist. Vorzugsweise ist der erste Aufnahmeraum-Abschnitt verdichterseitig der Stufe angeordnet und der zweite Aufnahmeraum-Abschnitt turbinenseitig der Stufe angeordnet.

Gemäß einer Ausführungsform der Erfindung ist die Stufe somit zwischen einem verdichterseitigen Bereich des Aufnahmeraums und einem turbinenseitigen Bereich des Aufnahmeraums angeordnet.

Gemäß einer Ausführungsform der Erfindung ist der erste Aufnahmeraum-Abschnitt für die Aufnahme eines Schublagers (eines als Gleitlager ausgeführten Axiallagers) dimensioniert und der zweite Aufnahmeraum-Abschnitt für die Aufnahme eines Wälzlagers dimensioniert.

Gemäß einer Ausführungsform der Erfindung ist der Durchmesser des verdichterseitigen Bereichs des Aufnahmeraums in Radialrichtung größer ist als der Durchmesser des turbinenseitigen Bereichs des Aufnahmeraums in Radialrichtung.

Gemäß einer Ausführungsform der Erfindung weist der Aufnahmeraum eine sich in Axialrichtung erstreckende Lagergehäuse-Bohrung auf zur Aufnahme eines Befestigungsmittels für die Befestigung eines ein in den Aufnahmeraum eingebauten Lagerbaugruppenmoduls. Die Lagergehäuse-Bohrung ist vorzugsweise eine Gewindebohrung, vorzugsweise eine Sackbohrung (zum Verdichter hin geöffnet), und vorzugsweise in der Stufe angebracht.

Gemäß einer Ausführungsform der Erfindung ist ein in den Aufnahmeraum eingebautes Lagerbaugruppenmodul im Bereich der Stufe des Aufnahmeraums mittels eines in das Lagergehäuse eingreifenden (insbesondere in die Lagergehäuse-Bohrung eingreifenden) Befestigungsmittels im Lagergehäuse befestigt.

Gemäß einer Ausführungsform der Erfindung weist das Lagerbaugruppenmodul im verdichterseitigen Bereich des Aufnahmeraums in Radialrichtung einen größeren Durchmesser auf als im turbinenseitigen Bereich des Aufnahmeraums.

Gemäß einer Ausführungsform der Erfindung weist das Lagerbaugruppenmodul in seinem verdichterseitigen Bereich eine sich in Axialrichtung erstreckende Lagerbaugruppenmodul-Bohrung auf, durch welche das in das Lagergehäuse eingreifende Befestigungsmittel geführt ist. Die Lagerbaugruppenmodul-Bohrung ist vorzugsweise eine durchgehende Bohrung.

Gemäß einer Ausführungsform der Erfindung weist das Lagergehäuse eine Ölzufuhr für das in den Aufnahmeraum eingebaute Lagerbaugruppenmodul auf. Die Ölzufuhr mündet vorzugsweise von einer axialen Richtung her kommend in den Aufnahmeraum, insbesondere von der Turbinenseite her kommend. Die Ölzufuhr mündet vorzugsweise in die Stufe. Die Ölzufuhr ist vorzugsweise mit Druck beaufschlagt und mündet in einem unterhalb der Turboladerachse gelegenen Halbraum des Lagergehäuses in den Aufnahmeraum.

Gemäß einer Ausführungsform der Erfindung befindet sich zwischen dem turbinenseitigen Ende des Lagerbaugruppenmoduls und dem turbinenseitigen Ende des Lagergehäuses im Betrieb des Abgasturboladers eine Lücke.

Gemäß einer Ausführungsform der Erfindung erfolgt eine Verwendung eines Lagerbaugruppenmoduls zum Lagern der Welle eines Abgasturboladers, wobei der Abgasturbolader ein modulares, zwischen einem Verdichter und einer Turbine des Abgasturboladers angeordnetes Lager enthält, wobei das Lager ein Lagergehäuse mit einem Aufnahmeraum aufweist, wobei der Aufnahmeraum eine Stufe aufweist, welche eine im Wesentlichen in radialer Richtung verlaufende Anschlagfläche hat, die zum Verdichter hin weist, so dass sie einen axialen Anschlag für ein verdichterseitig eingesetztes Lagerbaugruppenmodul definiert, und wobei die Stufe den Aufnahmeraum in einen verdichterseitigen, in Radialrichtung größeren ersten Aufnahmeraum-Abschnitt und einen turbinenseitigen, in Radialrichtung kleineren zweiten Aufnahmeraum-Abschnitt unterteilt, wobei der erste und zweite Aufnahmeraum-Abschnitt axial benachbart zueinander angeordnet sind und wobei die Stufe zwischen dem ersten und dem zweiten Aufnahmeraum-Abschnitt angeordnet ist, und wobei ein Ölkanal oder einer der Ölkanäle mit einem Ringkanal verbunden ist, der auf einer verdichterseitigen Stirnseite des Lagerbaugruppenmoduls angeordnet ist, und wobei das Lagerbaugruppenmodul in einem Satz von Lagerbaugruppenmodulen enthalten ist, wobei der Satz von Lagerbaugruppenmodulen ein Wälzlager aufweisendes Lagerbaugruppenmodul und ein Gleitlager aufweisendes Lagerbaugruppenmodul umfasst, wobei das Wälzlager aufweisende Lagerbaugruppenmodul und das Gleitlager aufweisende Lagerbaugruppenmodul in den Aufnahmeraum einbaubar und zerstörungsfrei aus dem Aufnahmeraum ausbaubar sind, und wobei das Lagerbaugruppenmodul zum Lagern der Welle des Abgasturboladers verwendet wird, indem es zerstörungsfrei ausbaubar in den Aufnahmeraum eingebaut wird.

Gemäß einer Ausführungsform der Erfindung werden bei einem Verfahren zum Lagern der Welle eines Abgasturboladers, wobei der Abgasturbolader ein modulares, zwischen einem Verdichter und einer Turbine des Abgasturboladers angeordnetes Lager enthält, wobei das Lager ein Lagergehäuse mit einem Aufnahmeraum aufweist, wobei der Aufnahmeraum eine Stufe aufweist, welche eine im Wesentlichen in radialer Richtung verlaufende Anschlagfläche hat, die zum Verdichter hin weist, so dass sie einen axialen Anschlag für ein verdichterseitig eingesetztes Lagerbaugruppenmodul definiert, und wobei die Stufe den Aufnahmeraum in einen verdichterseitigen, in Radialrichtung größeren ersten Aufnahmeraum-Abschnitt und einen turbinenseitigen, in Radialrichtung kleineren zweiten Aufnahmeraum-Abschnitt unterteilt, wobei der erste und zweite Aufnahmeraum-Abschnitt axial benachbart zueinander angeordnet sind und wobei die Stufe zwischen dem ersten und dem zweiten Aufnahmeraum-Abschnitt angeordnet ist, und wobei ein Ölkanal oder einer der Ölkanäle mit einem Ringkanal verbunden ist, der auf einer verdichterseitigen Stirnseite des Lagerbaugruppenmoduls angeordnet ist, folgende Schritte durchgeführt:
- Auswählen eines Lagerbaugruppenmoduls aus einem Satz von Lagerbaugruppenmodulen, zu welchem ein Wälzlager aufweisendes Lagerbaugruppenmodul und ein Gleitlager aufweisendes Lagerbaugruppenmodul gehören, wobei das Wälzlager aufweisende Lagerbaugruppenmodul und das Gleitlager aufweisende Lagerbaugruppenmodul in den Aufnahmeraum einbaubar und zerstörungsfrei aus dem Aufnahmeraum ausbaubar sind, und
- Einbauen des ausgewählten Lagerbaugruppenmoduls in den Aufnahmeraum.

Gemäß einer Ausführungsform der Erfindung wird folgender weiterer Verfahrensschritt durchgeführt:
- zerstörungsfreies Ausbauen eines in den Aufnahmeraum eingebauten Lagerbaugruppenmoduls, wobei entweder ein Wälzlager aufweisendes Lagerbaugruppenmodul zerstörungsfrei aus dem Aufnahmeraum ausgebaut und durch ein anderes, ebenfalls Wälzlager aufweisendes Lagerbaugruppenmodul oder ein Gleitlager aufweisendes Lagerbaugruppenmodul ersetzt wird oder ein Gleitlager aufweisendes Lagerbaugruppenmodul zerstörungsfrei aus dem Aufnahmeraum ausgebaut wird und durch ein anderes, ebenfalls Gleitlager aufweisendes Lagerbaugruppenmodul oder ein Wälzlager aufweisendes Lagerbaugruppenmodul ersetzt wird.

### KURZE BESCHREIBUNG DER ZEICHNUNGEN

Nachfolgend wird die Erfindung anhand von Ausführungsbeispielen beschrieben, die anhand von Zeichnungen näher erläutert werden. Hierbei zeigt
- Fig. 1: eine erste Skizze eines Abgasturboladers mit eingebautem Lagerbaugruppenmodul,
- Fig. 2: eine zweite Skizze eines Abgasturboladers mit eingebautem Lagerbaugruppenmodul,
- Fig. 3: Darstellungen zur Veranschaulichung eines Lagerbaugruppenmoduls,
- Fig. 4: eine Schnittdarstellung eines Teils der dem Ölfangblech benachbarten Wälzlagerkartusche,
- Fig. 5: Darstellungen zur Veranschaulichung eines Ölfangbleches,
- Fig. 6: eine Schnittdarstellung eines weiteren Teils der Wälzlagerkartusche,
- Fig. 7: Darstellungen zur Veranschaulichung eines Abschlussdeckels und
- Fig. 8: eine Schnittdarstellung zur Veranschaulichung einer Realisierung einer Verdrehsicherung.

### BESCHREIBUNG VON AUSFÜHRUNGSBEISPIELEN

Gemäß der vorliegenden Erfindung wird ein Abgasturbolader bereitgestellt, welcher ein zwischen einem Verdichter und einer Turbine angeordnetes, für eine Lagerung einer Welle ausgebildetes modulares Lager enthält, wobei das Lager ein Lagergehäuse mit einem Aufnahmeraum aufweist, wobei in den Aufnahmeraum ein Lagerbaugruppenmodul einbaubar oder eingebaut und zerstörungsfrei ausbaubar ist, wobei der Aufnahmeraum derart dimensioniert ist, dass wahlweise ein Wälzlager aufweisendes Lagerbaugruppenmodul oder ein Gleitlager aufweisendes Lagerbaugruppenmodul einbaubar ist, wobei der Aufnahmeraum eine Schnittstelle aufweist, die zur Kontaktierung mit dem Lagerflansch eines in den Aufnahmeraum eingebauten Lagerbaugruppenmoduls ausgebildet ist und wobei die Schnittstelle zur Verbindung eines durch das Lagergehäuse geführten Ölkanals mit einem oder mehreren durch einen Lagerflansch des Lagerbaugruppenmoduls geführten Ölkanälen ausgebildet ist.

Des Weiteren stellt die vorliegende Erfindung ein Lagerbaugruppenmodul bereit, bei welchem alle für eine arbeitsfähige Wälzlagerung notwendigen Bauteile einer Lagereinheit für einen Abgasturbolader in einem einstückigen Lagerbaugruppenmodul enthalten sind, welches bei Bedarf durch ein neues identisch aufgebautes Lagerbaugruppenmodul oder auch durch eine Lagerbaugruppenmodulvariante, welche Gleitlager aufweist, ersetzt werden kann.

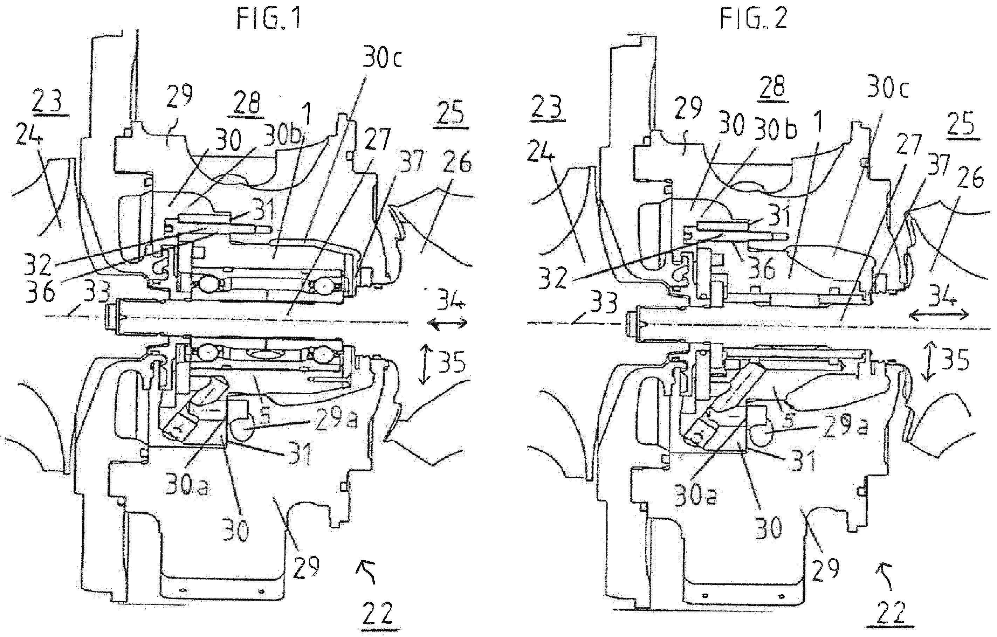

Die Figur 1 zeigt eine erste Skizze eines Abgasturboladers mit eingebautem Lagerbaugruppenmodul. Dieser Abgasturbolader 22 weist einen Verdichter 23, eine Turbine 25 und ein zwischen dem Verdichter und der Turbine angeordnetes Lager 28 auf. Dabei sind in der Figur 1 vom Verdichter 23 das Verdichterrad 24 und von der Turbine 25 das Turbinenrad 26 gezeigt. Das Verdichterrad 24 und das Turbinenrad 26 sind mit einer Welle 27 des Abgasturboladers 22 drehfest verbunden, die im Lager 28 gelagert ist. Das Lager 28 weist ein Lagergehäuse 29 auf. In diesem Lagergehäuse 29 ist ein Aufnahmeraum 30 vorgesehen. In diesen Aufnahmeraum 30 ist ein Lagerbaugruppenmodul 1 eingesetzt. Bei diesem Lagerbaugruppenmodul handelt es sich um ein Wälzlager aufweisendes Lagerbaugruppenmodul. Diese Wälzlager sind Bestandteil einer Wälzlagerkartusche, deren Aufbau unten anhand weiterer Figuren erläutert wird. Der Aufnahmeraum 30 ist derart dimensioniert, dass wahlweise ein Wälzlager aufweisendes Lagerbaugrupenmodul oder ein Gleitlager aufweisendes Lagerbaugruppenmodul einbaubar ist und im eingebauten Zustand im Betrieb des Abgasturboladers zur Lagerung der mit hoher Geschwindigkeit rotierenden Welle des Abgasturboladers dient.

Der Aufnahmeraum 30 und damit auch das Lagergehäuse 29 weisen eine Stufe 31 auf. Diese Stufe ist im mittleren Bereich der Axialerstreckung des Aufnahmeraums 30 vorgesehen. Dabei stimmt die Axialrichtung 34 des Abgasturboladers mit der Längsrichtung der Drehachse 33 des Abgasturboladers überein. Die Radialrichtung 35 des Abgasturboladers erstreckt sich im rechten Winkel zur Axialrichtung 34. Beim Einsetzen des Lagerbaugruppenmoduls von der Verdichterseite des Abgasturbuladers axial in den Aufnahmeraum 30 des Lagergehäuses 29 dient die Stufe des Lagergehäuses als Anschlag. Der turbinenseitige Endbereich des Lagerbaugruppenmoduls bildet eine Dichtfläche.

Die Stufe 31 ist zwischen einem verdichterseitigen Bereich 30b des Aufnahmeraums 30 und einem turbinenseitigen Bereich 30c des Aufnahmeraums 30 angeordnet. Der Durchmesser des verdichterseitigen Bereichs 30b des Aufnahmeraums 30 ist in Radialrichtung größer als der Durchmesser des turbinenseitigen Bereichs 30c des Aufnahmeraums 30. Durch diese Maßnahme wird im verdichterseitigen Bereich 30b des Aufnahmeraums 30 Platz für ein Schublager geschaffen, welcher beim Einbau eines Gleitlagers in den Aufnahmeraum benötigt wird.

Das in den Aufnahmeraum 30 eingebaute Lagerbaugruppenmodul 1 weist im verdichterseitigen Bereich 30b des Aufnahmeraums 30 in Radialrichtung 35 einen größeren Durchmesser auf als im turbinenseitigen Bereich 30c des Aufnahmeraums 30 und ist im Bereich der Stufe 31 mittels eines in das Lagergehäuse 29 eingreifenden Befestigungsmittel 32 im Lagergehäuse 29 befestigt. Zu diesem Zweck weist das Lagerbaugruppenmodul in seinem verdichterseitigen Bereich eine sich in Axialrichtung 34 erstreckende Bohrung 36 auf, durch welche das in das Lagergehäuse 29 eingreifende Befestigungsmittel 32 geführt ist. Bei diesem Befestigungsmittel 32 handelt es sich beispielsweise um eine Schraube.

Zwischen dem turbinenseitigen Ende des Lagerbaugruppenmoduls 1 und dem turbinenseitigen Ende des Lagergehäuses 29 befindet sich im Betrieb des Abgasturboladers eine Lücke 37. Diese Lücke erlaubt es, Kühlöl von der Wellenschulter in Richtung des turbinenseitigen Bereichs des Aufnahmeraums 30 wegzuspritzen.

Wie vorstehend beschrieben ist in den Aufnahmeraum 30 des Lagergehäuses alternativ ein ein Wälzlager aufweisendes Lagerbaugruppenmodul oder ein ein Gleitlager aufweisendes Lagerbaugruppenmodul einbaubar. Die vorstehend beschriebene spezielle Ausgestaltung des Aufnahmeraums 30, der in seinem verdichterseitigen Bereich 30b einen größeren Durchmesser in Radialrichtung 35 hat als im turbinenseitigen Bereich 30c des Aufnahmeraums 30, ist darauf zurückzuführen, dass ein ein Gleitlager aufweisendes Lagerbaugruppenmodul zusätzlich zu Radialkräften aufnehmenden Radiallagern zur Aufnahme von in Axialrichtung wirkenden Kräften ein gesondertes Schublager benötigt, welches in Radialrichtung einen vergleichsweise großen Platzbedarf hat. Beide vorgenannten Lagerbaugruppenmodule sind in ihrem im verdichterseitigen Bereich 30b des Aufnahmeraums 30 angeordneten Bereich in Radialrichtung verbreitert ausgebildet, so dass eine Befestigung des jeweiligen Lagerbaugruppenmoduls im Lagergehäuse 29 im Bereich der Stufe 31 des Aufnahmeraums 30 erfolgen kann. Zu diesem Zweck ist im jeweiligen Lagerbaugruppenmodul eine sich in Axialrichtung 34 erstreckende Bohrung 36 vorgesehen, durch welche Befestigungsmittel 32 geführt sind, die sich bis in den Bereich des Lagergehäuses 29 erstrecken und zur Befestigung des jeweiligen Lagerbaugruppenmoduls im Aufnahmeraum 30 vorgesehen sind.

Jedes der genannten Lagerbaugruppenmodule ist aus dem Aufnahmeraum 30 und damit aus dem Lagergehäuse 29 des Lagers 28 axial in Richtung des Verdichters 23 zerstörungsfrei ausbaubar, so dass es außerhalb des Abgasturboladers gewartet und dann wieder zur weiteren Verwendung in den Aufnahmeraum 30 des Lagergehäuses 29 des Lagers 28 eingebaut werden kann. Bei dieser Wartung besteht die Möglichkeit, das Lagerbaugruppenmodul in seine Einzelteile zu zerlegen und Einzelteile zu warten, zu reparieren oder zu ersetzen.

Alternativ zu einer Wartung des aus dem Aufnahmeraum ausgebauten Lagerbaugruppenmoduls kann dieses Lagerbaugruppenmodul auch im Falle eines nicht reparierbaren Defektes durch ein typgleiches neues Lagerbaugruppenmodul ersetzt werden. Beispielsweise kann ein defektes, Wälzlager aufweisendes Lagerbaugruppenmodul durch ein neues typgleiches, Wälzlager aufweisendes Lagerbaugruppenmodul ersetzt werden. Alternativ dazu kann ein defektes, Gleitlager aufweisendes Lagerbaugruppenmodul durch ein neues typgleiches, ebenfalls Gleitlager aufweisendes Lagerbaugruppenmodul ersetzt werden.

Eine weitere Alternative besteht darin, ein in den Aufnahmeraum 30 eingebautes Lagerbaugruppenmodul aus dem Aufnahmeraum auszubauen und durch ein Lagerbaugruppenmodul eines anderen Typs zu ersetzen. Beispielsweise kann ein Wälzlager aufweisendes Lagerbaugruppenmodul durch ein Gleitlager aufweisendes Lagerbaugruppenmodul ersetzt werden. Alternativ dazu kann ein Gleitlager aufweisendes Lagerbaugruppenmodul durch ein Wälzlager aufweisendes Lagerbaugruppenmodul ersetzt werden.

Der Aufnahmeraum 30 des Lagergehäuses 29 ist mit einer Schnittstelle 30a ausgestattet, die zur Kontaktierung mit dem Lagerflansch 5 des jeweiligen Lagerbaugruppenmoduls ausgebildet ist. In vorteilhafter Weise ist diese Schnittstelle zur Verbindung eines durch das Lagergehäuse 29 geführten Ölkanals 29a mit einem oder mehreren durch den Lagerflansch 5 des Lagerbaugruppenmoduls geführten Ölkanälen ausgebildet. Gemäß einem Ausführungsbeispiel ist einer dieser Ölkanäle mit einem Ringkanal verbunden, der auf der verdichterseitigen Stirnseite des Lagerbaugruppenmoduls angeordnet ist. Von dort aus erfolgt die Ölversorgung des Radiallagers.

Die Figur 2 zeigt eine zweite Skizze eines Abgasturboladers mit eingebautem Lagerbaugruppenmodul. Der in der Figur 2 dargestellte Abgasturbolader ist derselbe Abgasturbolader, wie er in der Figur 1 dargestellt ist, mit der Ausnahme, dass in den Aufnahmeraum 30 des Lagergehäuses 29 des Lagers 28 ein Gleitlager aufweisendes Lagerbaugruppenmodul 1 eingebaut ist, wobei auch hier die Schnittstelle 30a des Aufnahmeraumes 30 zur Kontaktierung mit dem Lagerflansch 5 des Lagerbaugruppenmoduls ausgebildet ist und wobei die Schnittstelle 30a auch hier zur Verbindung eines durch das Lagergehäuse 29 geführten Ölkanals 29a mit einem oder mehreren durch den Lagerflansch 5 des Lagerbaugruppenmoduls geführten Ölkanälen ausgebildet ist, wobei über einen dieser durch den Lagerflansch geführten Ölkanäle die Ölversorgung des Gleitlagers erfolgt.

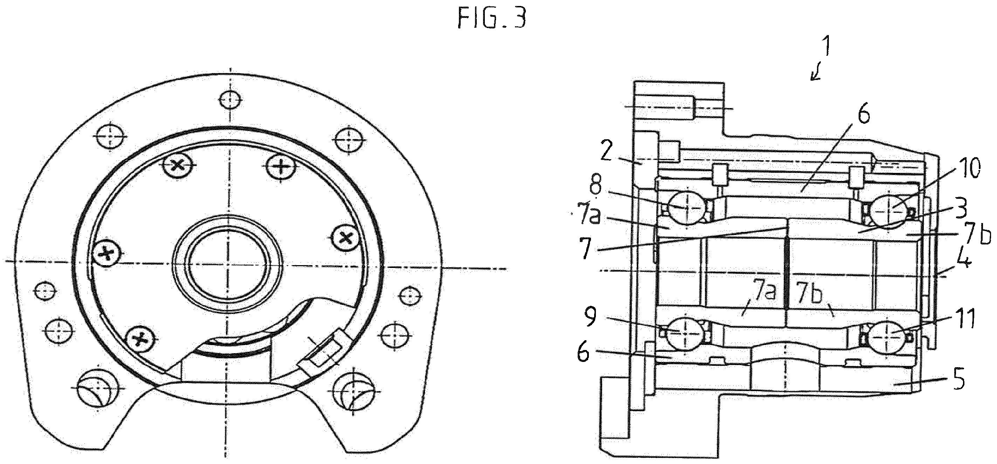

Die Figur 3 zeigt eine Schnittdarstellung zur Veranschaulichung eines Ausführungsbeispiels für ein erfindungsgemäßes Lagerbaugruppenmodul 1. Dieses enthält einen Abschlussdeckel 2, eine Wälzlagerkartusche 3, ein Ölfangblech 4, einen Lagerflansch 5 und eine aus der Figur 3 nicht ersichtliche Verdrehsicherung. Diese Bauteile sind unter Verwendung von Verbindungselementen, insbesondere Schrauben, fest miteinander verbunden, wobei die Wälzlagerkartusche im durch Lagerflansch, Abschlussdeckel und Verdrehsicherung gegebenen Raum beweglich ist. Die genannten Bauteile bilden ein einstückiges Lagerbaugruppenmodul, welches komplett in den Aufnahmeraum 30 des Lagergehäuses 29 des Abgasturboladers 22 eingebaut werden kann. Dieser Abgasturbolader ist unter anderen Verwendungsmöglichkeiten zur Aufladung eines Motors vorgesehen, bei welchem es sich beispielsweise um einen Schiffsmotor oder einen Motor zur Stromerzeugung handelt. Ein Abgasturbolader eines solchen Motors zeichnet sich insbesondere dadurch aus, dass der Durchmesser des Verdichterrades des Abgasturboladers größer ist als 110 mm. Bei Abgasturboladern jener Industriezweige besteht die Notwendigkeit einer Wartung des Abgasturboladers, bei welcher unter anderem ein Ausbau und bei Bedarf auch eine Zerlegung des Lagers notwendig ist, um einzelne Bauteile warten, bei Bedarf reparieren und bei Bedarf auch ersetzen zu können.

Das in der Figur 3 gezeigte Lagerbaugruppenmodul ist für eine Innenlagerung einer Welle des Abgasturboladers zwischen dem Verdichter und der Turbine des Abgasturboladers ausgebildet, wie es bereits in der Figur 1 veranschaulicht ist.

Der Abschlussdeckel 2 ist -wie noch unten erläutert wird- mit rotordynamikverbessernden Merkmalen ausgestattet. Die Wälzlagerkartusche 3 weist -wie ebenfalls noch unten erläutert wird- Merkmale für ein vereinfachtes Demontieren auf. Das Ölfangblech 4 ist insbesondere für eine aktive Wellenkühlung ausgebildet und unterstützt des Weiteren eine Demontage des Lagerbaugruppenmoduls. Der Lagerflansch 5 ist vorzugsweise einstückig ausgebildet und dient unter anderem der Schmierölversorgung des Wälzlagers und der Kühlölversorgung des Lagerbaugruppenmoduls. Die Verdrehsicherung fixiert die Positionierung eines Außenrings des Wälzlagers.

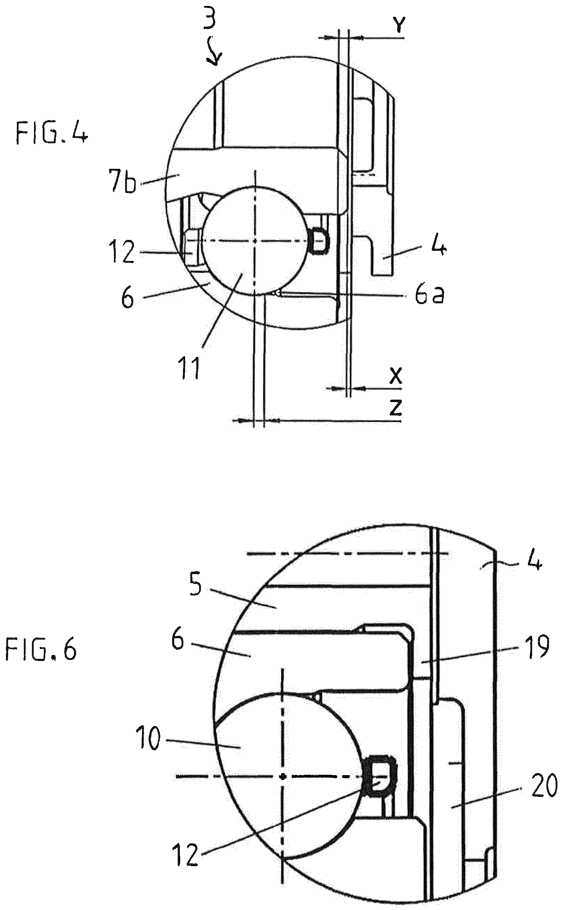

Die in der Figur 3 gezeigte Wälzlagerkartusche 3 enthält ein Wälzlager, welches einen Außenring 6, einen zweiteiligen Innenring 7 mit einem ersten Innenringteil 7a und einem zweiten Innenringteil 7b und zwischen dem Innenring 7 und dem Außenring 6 angeordnete Wälzkörper 8, 9, 10 und 11 aufweist, bei denen es sich vorzugsweise um Kugeln handelt. Diese Kugeln sind in einem Käfig gelagert, der in der Figur 4 mit dem Bezugszeichen 12 veranschaulicht ist.

Das in der Figur 3 gezeigte Lagerbaugruppenmodul 1 kann in einen zwischen der Turbine und dem Verdichter des Abgasturboladers vorgesehenen Aufnahmeraum des Lagergehäuses des Lagers eingesetzt werden und mit dem Lagergehäuse verschraubt werden, wie es bereits in der Figur 1 veranschaulicht ist.

Die Figur 4 zeigt eine Schnittdarstellung eines Teils der dem Ölfangblech 4 benachbarten Wälzlagerkartusche 3. Von dieser Wälzlagerkartusche 3 sind in der Figur 4 ein Teil des Außenrings 6, ein Teil des zweiten Innenringteils 7b, die Kugel 11 und ein Teil des Käfigs 12, innerhalb dessen die Kugel 11 angeordnet ist, veranschaulicht. Wie aus der Figur 4 ersichtlich ist, weist der Außenring 6 ein Bord 6a auf. Des Weiteren ist aus der Figur 4 ersichtlich, dass das turbinenseitig angeordnete zweite Innenringteil 7b in Axialrichtung nach außen, d.h. in Richtung zur Turbine, relativ zum turbinenseitigen Außenrand des Außenrings 6 verlängert ist. Diese Verlängerung Y erleichtert bei in das Lagergehäuse eingesetztem Lagerbaugruppenmodul eine Demontage der Welle des Abgasturboladers, ohne dass Beschädigungen der Wälzlagerkartusche 3 auftreten. Während der verdichterseitige Wälzlagerinnenringteil 7a durch den verdichterseitigen Kugelsatz gestützt wird, verbleibt der turbinenseitige Wälzlagerinnenringteil 7b vorerst auf der Welle und bewegt den turbinenseitigen Kugelsatz in Richtung zur Turbine, nachdem die Wälzlagerkartusche 3 turbinenseitig mit dem Außenring 6 an der Wandung 19 (siehe Fig 6) ansteht. Der axiale Spalt X zwischen dem Innenring 7 und dem Ölfangblech 4 ist dabei kleiner als die axiale Beweglichkeit Z des turbinenseitigen Kugelsatzes in der Kugellauffläche der unverspannten Wälzlagerkartusche. Somit steht der Innenring 7 fest an einer Wandung an, während der Kugelsatz unbelastet bleibt und die Welle ausgepresst werden kann. Ohne einen derartigen axialen Anschlag würde der Innenring 7 weiter in Richtung zur Turbine wandern und den turbinenseitigen Kugelsatz über den in der Figur 4 gezeigten Bord 6a drücken, die Kugeln und deren Laufflächen beschädigen und die Wälzlagerkartusche unkontrolliert zerlegen. Im Betrieb des Abgasturboladers kann der Innenring 7 das Ölfangblech 4 hingegen nicht berühren.

Im Betrieb des Abgasturboladers wird Öl zur Schmierung und Kühlung des Wälzlagers, zur Dämpfung zwischen Wälzlagerkartusche und Lagerflansch und zur Kühlung der Wellenschulter und des Innenrings auf der Turbinenseite verwendet. Zum Zwecke dieser Ölversorgung weist der einteilig ausgebildete Lagerflansch 5 Ölversorgungskanäle auf. Aus Gründen der Kompaktheit sind dabei zwei Ringnuten zur Ölversorgung des Quetschöldämpfers des Wälzlagers nicht in den Lagerflansch 5, sondern in der Wälzlagerkartusche vorgesehen. Ein Kühlölkanal für die Wellenschulter ist zwischen dem Lagerflansch 5 und dem Ölfangblech 4 vorgesehen.

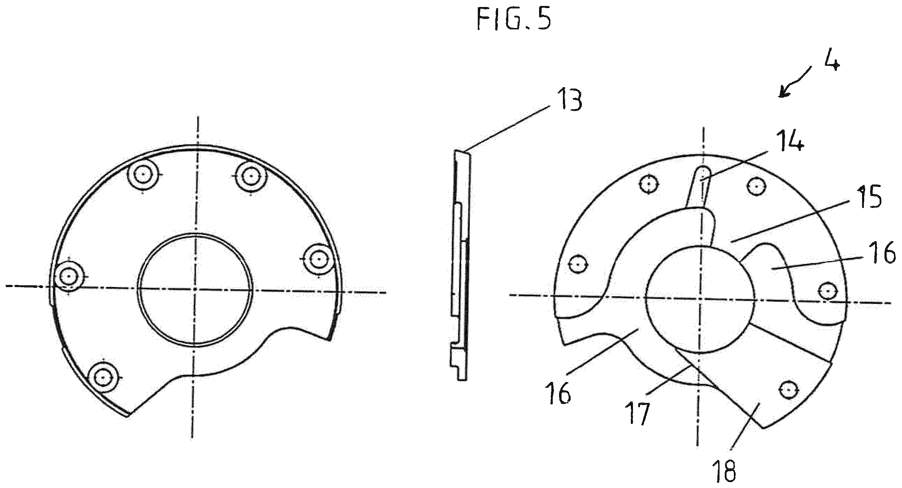

Die Figur 5 zeigt Darstellungen zur Veranschaulichung des Ölfangbleches 4. Dieses Ölfangblech 4 weist eine Ablaufrinne 13, einen Kühlölkanal 14, eine erste Rippe 15, eine Dichtungswandung 16, einen Ölhobel 17 und eine zweite Rippe 18 auf.

Das Ölfangblech 4 hat neben einer Dichtfunktion auch weitere Funktionen. Die Rippen 15 und 18 des Ölfangblechs bilden das Gegenlager für den turbinenseitigen Innenringteil 7b bei einem Abpressen der Welle. Die Geometrie des eingebrachten Kühlölkanals 14 definiert die Spritzrichtung und die Kühlölmenge für die Wellenschulter und ist derart gestaltet, dass das Kühlöl in Drehrichtung der Welle auf die Welle gespritzt wird. Ein Ringraum zwischen der Wälzlagerkartusche 3, der Welle und dem Ölfangblech 4 ist dabei derart gestaltet, dass der Ölnebel vor der nächsten Dichtstelle des Abgasturboladers zurückgehalten wird.

Die Rippen 15 und 18 sind derart ausgebildet, dass sie die Dichtfunktion der Dichtscheibe möglichst wenig behindern und dennoch eine ausreichende Stabilität des gesamten Lagerbaugruppenmoduls für eine problemlose Demontage gewährleisten. Der tangentiale Rippenbeginn der in der Figur 5 unteren Rippe 18 dient als Ölhobel 17.

Die bereits genannte Ablaufrinne 13 ist dadurch gebildet, dass der äußere Durchmesser des Ölfangblechs 4 gegenüber der Gegenfläche des Lagerflansches 5 vergrößert ist.

Die größte Dichtfunktion neben der Ablaufrinne 13 und dem Ölhobel 17 wird durch einen geschlossenen Ringraum zwischen dem Wälzlager, dem Ölfangblech und der Welle erzielt. Dabei verhindert eine bis tief in Richtung der Welle gezogene Wandung, dass sich ein entstehender Ölnebel bis zur nächsten Dichtstelle des Abgasturboladers hin ausbreitet. Der Dichtspalt liegt dabei zwischen 1% und 6% des Durchmessers der Welle.

Das Ölfangblech 4 ist unter Verwendung von Befestigungsmitteln, die den benötigten Bauraum klein halten, am Lagerflansch 5 befestigt. Zu dieser Befestigung werden beim gezeigten Ausführungsbeispiel insgesamt fünf Senkkopfschrauben verwendet. Diese Senkkopfschrauben ermöglichen eine einfach handhabbare Zentrierung des Ölfangblechs 4 durch einen gleichmäßigen Schraubenanzug und damit eine Einstellung eines möglichst kleinen Dichtspalts zwischen dem Ölfangblech 4 und der Welle des Abgasturboladers.

Wie bereits oben ausgeführt wurde, kann durch eine geeignete Geometrie des Kühlölkanals 14 die Kühlölmenge in gewünschter Weise eingestellt werden. Da sich diese Funktionsgeometrie nicht im Lagerflansch 5, sondern in dem einfacher gestalteten und preisgünstigeren Ölfangblech 4 befindet, kann in Abhängigkeit vom jeweiligen Anwendungsfall das Ölfangblech 4 zur Anpassung an jeweils vorliegende Kühlungsanforderungen modifiziert werden. Der Kühlölkanal ist dabei derart ausgeführt, dass das Kühlöl im Betrieb des Lagerbaugruppenmoduls in Drehrichtung der Welle auf die Welle gespritzt wird. Der äußerste Spritzölbereich trifft dabei tangential auf die Welle, so dass das Auftreten eines Ölstaus im Ringkanal durch die beschriebene Richtungsvorgabe vermindert wird und die Öldichtheit gewährleistet ist.

Eine weitere turbinenseitige Verbesserung der Ölabdichtung innerhalb des Lagerbaugruppenmoduls wird durch eine umlaufende dünne Wandung erreicht. Diese verhindert, dass Öl des Quetschöldämpfers des Wälzlagers dort, wo das Ölfangblech 4 zwecks eines besseren Ölablaufs offen ausgebildet ist, unkontrolliert wegspritzen kann. Des Weiteren trennt diese Wandung den Ölvolumenstrom des Quetschöldämpfers vom Kühlölstrom. Dies erlaubt eine genauere Einstellung einer jeweils erforderlichen Kühlölmenge. Das Öl des turbinenseitigen Quetschöldämpfers fliesst durch die Wandung auch kontrolliert nur an einer Stelle, der unteren Öffnung, ab.

Die Figur 6 zeigt eine Schnittdarstellung eines weiteren kleinen Bereichs des Lagerbaugruppenmoduls 1. In dieser Figur 6 sind Teile des Ölfangblechs 4, des Lagerflansches 5, des Außenrings 6, der Kugel 10 und des Käfigs 12 dargestellt. Der Lagerflansch 5 weist eine in Radialrichtung nach innen geformte, umlaufende Wandung 19 auf, die zur Trennung des Kühlölstroms vom Öl der Quetschöldämpfers ausgebildet ist. Diese umlaufende Wandung 19 hat des Weiteren eine Dichtungsfunktion, die ein axiales Wegspritzen von Öl aus dem Quetschöldämpfer in Richtung zum Ölfangblech 4 verhindert. Des Weiteren ist in der Figur 6 ein Ringraum 20 veranschaulicht. Dieser ist zwischen dem Wälzlager, der umlaufenden Wandung und der Welle des Abgasturboladers gebildet.

Die gezeigte umlaufende Wandung 19 führt aus rotordynamischer Sicht zu einem seitlich geschlossenen Quetschöldämpfer. Ein Vorteil hiervon ist eine geringere Kavitationsneigung der Ölrandzone, wodurch wiederum eine stabilere Dämpfung erreicht wird. Diese stabilere Dämpfung erhöht die Lebensdauer des Lagerbaugruppenmoduls und damit des gesamten Abgasturboladers.

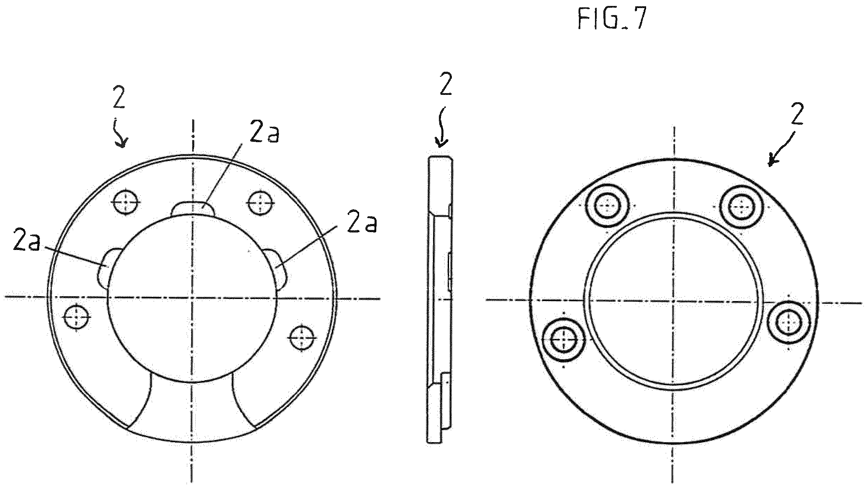

In der Figur 7 ist der bereits oben genannte Abschlussdeckel 2 veranschaulicht, der auf der Verdichterseite des Lagerbaugruppenmoduls angeordnet ist. Dieser Abschlussdeckel ist vorzugsweise aus Buntmetall hergestellt und bildet einen axialen Anschlag zum Aufnehmen einer in Richtung zum Verdichter hin wirkenden Schubbelastung der Welle. Die Wahl von Buntmetall als Werkstoff für den Abschlussdeckel 2 begünstigt das Reibverhalten zwischen dem Abschlussdeckel 2 und der Wälzlagerkartusche 3. Da während des Betriebs des Abgasturboladers die Schubkraft eine Reibkraft an der Stirnseite der Wälzlagerkartusche hervorruft, kann durch eine Reibungsoptimierung die Beeinflussung auf das Dämpfungsverhalten des Quetschöldämpfers reduziert werden, da sich die Wälzlagerkartusche freier bewegen kann. Auch dies erhöht die Lebensdauer des Lagerbaugruppenmoduls 1 und damit die Lebensdauer des gesamten Abgasturboladers.

Da -wie beschrieben- die Wälzlagerkartusche 3 aufgrund der Schubrichtung des Rotors des Abgasturboladers meist am Abschlussdeckel 2 auf der Verdichterseite des Lagerbaugruppenmoduls 1 ansteht, kann das Öl auf der Turbinenseite des Lagerbaugruppenmoduls 1 zwischen der Wälzlagerkartusche 3 und der dünnen, umlaufenden Wandung 19 etwas leichter abfließen. Um dem Rechnung zu tragen, dass unterschiedliche Fließgeschwindigkeiten des Öls des verdichter- und turbinenseitigen Quetschöldämpfers zu unterschiedlichen Dämpfungseigenschaften führen, sind am Abschlussdeckel 2 Aussparungen 2a vorgesehen, die den Ölstrom und damit die Ölgeschwindigkeit wieder vereinheitlichen. Auch dies erhöht wiederum die Lebensdauer des Lagerbaugruppenmoduls 1 und damit die Lebensdauer des gesamten Abgasturboladers. Diese Aussparungen 2a im Abschlussdeckel 2 sind derart dimensioniert, dass deren engste Querschnitte in ihrer Summe zwischen 5% und 30% größer sind als die Ablauffläche auf der Gegenseite, wobei der Ölabfluss am unteren Punkt auf Verdichter- und Turbinenseite gleich und bei genannter Rechnung ausgeklammert ist. Diese Vergrößerung ist als Kompensation der erschwerten Fließbedingungen auf der Verdichterseite des Lagerbaugruppenmoduls 1 vorgesehen.

Aus der Figur 7 ist ersichtlich, dass der Abschlussdeckel 2 beim gezeigten Ausführungsbeispiel drei derartige Aussparungen 2a aufweist.

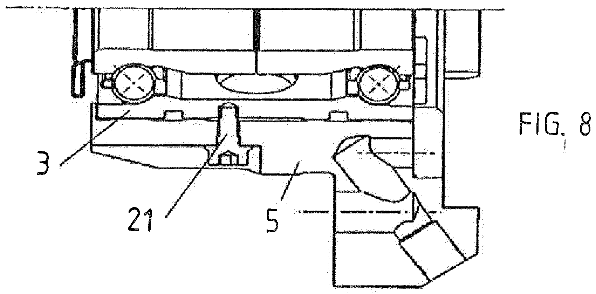

Die Figur 8 zeigt eine Schnittdarstellung zur Veranschaulichung einer Realisierung einer Verdrehsicherung. Zu dieser Verdrehsicherung ist eine Verdrehsicherungsschraube 21 durch den Lagerflansch 5 bis in die Wälzlagerkartusche 3 geführt.

Eine wälzgelagerte Welle eines Abgasturboladers kann gegenüber einer gleitgelagerten Welle leicht modifiziert sein oder auch die gleiche Welle sein.

Im Rahmen der funktional nötigen Anpassungen sind Merkmale vorgesehen, die die Lebensdauer der Wälzlagerung erhöhen.

Der geringere Kontaktbereich insbesondere auf der Turbinenseite zwischen der Welle und dem Lagerring bewirkt einen verminderten Wärmeeintrag von der Welle in den Lagerring. Da die Lagerlebensdauer direkt von der Lagertemperatur abhängt, bewirkt dieser verminderte Wärmeeintrag von der Welle in den Lagerring eine Erhöhung der Lebensdauer des Lagerbaugruppenmoduls und damit des gesamten Abgasturboladers.

Der geringe Durchmesser des Innenringanschlags führt zu einer größeren Fläche am Innenring, die mit Kühlöl in Kontakt kommt. Dies hat ebenfalls eine Temperaturreduzierung zur Folge. Auch diese Temperaturreduzierung führt zu einer Erhöhung der Lebensdauer des Lagerbaugruppenmoduls und damit des gesamten Abgasturboladers.

Die nachfolgende Aufstellung faßt vorteilhafte Eigenschaften zumindest einiger Ausführungsformen der Erfindung zusammen.

Vorteilhafte Eigenschaften in Bezug auf die Lebensdauer:
- Applikationsvariable Wellen- und Lagerkühlung durch eine Verwendung eines separaten Kühlölkanals,
- Möglichkeit einer Demontage ohne Zerstörung des Lagers,
- Verbesserung der Rotordynamik durch eine Vereinheitlichung der Dämpfungseigenschaften auf beiden Seiten des Lagerbaugruppenmoduls durch Ölablaufkanäle und eine reibungsoptimierte Werkstoffpaarung,
- Verringerung der Kontaktfläche zwischen der Welle und den Lagerringen zwecks geringerem Wärmeeintrag.

Vorteilhafte Eigenschaften in Bezug auf die Komplexität:
- Austauschbarkeit einer Wälzlagervariante mit einer Gleitlagervariante durch Verwendung eines modularen Lagerflanschkonzeptes,
- Nachrüstbarkeit durch eine Verwendung von Gleichteilen,
- Verwendung eines gemeinsamen Ölkreislaufs für Motor und Abgasturbolader,
- Demontierbarkeit ohne eine Zerstörung des Lagers,
- Zentrierung der Dichtscheibe mittels Senkkopfschrauben,
- Entfall einer axialen Lagerstabilisierung im Quetschöldämpfer durch Reibungsoptimierung.

Vorteilhafte Eigenschaften in Bezug auf die Öldichtheit:
- Verwendung eines Ölhobels,
- Verwendung einer Ablaufrinne,
- dünne Wandung nach innen bis nahe an die Welle gegen Ölnebel,
- dünne Wandung zum Abgrenzen des Quetschöldämpfers,
- abflussoptimierte Stützrippen zu einer vereinfachten Demontage,
- Spritzrichtung des Kühlöls in Wellendrehrichtung.

Ein Lagerbaugruppenmodul mit Wälzlagerung, wie es vorstehend beschrieben wurde, ist in das Lagergehäuse des Lagers eines Abgasturboladers einsetzbar oder eingesetzt, wie es bereits oben anhand der Figur 1 veranschaulicht wurde. Dieses Lagergehäuse weist in vorteilhafter Weise eine Schnittstelle für das Lagerbaugruppenmodul auf, die zur Kontaktierung mit dem Lagerflansch des Lagerbaugruppenmoduls ausgebildet ist. Das Lagerbaugruppenmodul kann bei Bedarf in vorteilhafter Weise zerstörungsfrei aus dem Abgasturbolader ausgebaut werden und auch selbst zerstörungsfrei zerlegt werden, um einzelne Bauteile ersetzen zu können. Beispielsweise kann aus dem genannten Lagergehäuse das erfindungsgemäße, Wälzlager aufweisende Lagerbaugruppenmodul ausgebaut und durch ein Gleitlager aufweisendes Lagerbaugruppenmodul ersetzt werden. Dieses Gleitlager aufweisende Lagerbaugruppenmodul und das Wälzlager aufweisende Lagerbaugruppenmodul stimmen in Bezug auf die Bauform und die Außenmaße soweit überein, dass das Wälzlager aufweisende Lagerbaugruppenmodul und das Gleitlager aufweisende Lagerbaugruppenmodul austauschbar in den Aufnahmeraum des Lagergehäuses des Lagers eingesetzt werden können. Auch das Gleitlager aufweisende Lagerbaugruppenmodul weist einen Lagerflansch auf, der mit der Schnittstelle des Lagergehäuses des Abgasturboladers kontaktierbar ist. Diese Schnittstelle ist -wie bereits oben ausgeführt wurde- in vorteilhafter Weise zur Verbindung eines durch das Lagergehäuse geführten Ölkanals mit einem oder mehreren durch den Lagerflansch des Lagerbaugruppenmoduls geführten Ölkanälen ausgebildet.

### BEZUGSZEICHENLISTE

- 1: Lagerbaugruppenmodul
- 2: Abschlussdeckel
- 3: Wälzlagerkartusche
- 4: Ölfangblech
- 5: Lagerflansch
- 6: Außenring
- 6a: Bord
- 7: Innenring
- 7a: Erstes Innenringteil
- 7b: Zweites Innenringteil
- 8: Kugel
- 9: Kugel
- 10: Kugel
- 11: Kugel
- 12: Käfig
- 13: Ablaufrinne
- 14: Kühlölkanal
- 15: Erste Rippe
- 16: Dichtungswandung
- 17: Ölhobel
- 18: Zweite Rippe
- 19: Wandung
- 20: Ringraum
- 21: Verdrehsicherungsschraube
- 22: Abgasturbolader
- 23: Verdichter
- 24: Verdichterrad
- 25: Turbine
- 26: Turbinenrad
- 27: Welle
- 28: Lager
- 29: Lagergehäuse
- 29a: durch das Lagergehäuse geführter Ölkanal
- 30: Aufnahmeraum
- 30a: Schnittstelle des Aufnahmeraums
- 30b: verdichterseitiger Bereich des Aufnahmeraums 30
- 30c: turbinenseitiger Bereich des Aufnahmeraums 30
- 31: Stufe
- 32: Befestigungsmittel
- 33: Drehachse des Abgasturboladers
- 34: Axialrichtung
- 35: Radialrichtung
- 36: Bohrung im Lagerbaugruppenmodul
- 37: Lücke

- X: Abstand
- Y: Verlängerung
- Z: Abstand

## Patentansprüche

1. Abgasturbolader (22), welcher ein zwischen einem Verdichter (23) und einer Turbine (25) angeordnetes, für eine Lagerung einer Welle (27) ausgebildetes modulares Lager (28) enthält, wobei das Lager ein Lagergehäuse (29) mit einem Aufnahmeraum (30) aufweist, wobei in den Aufnahmeraum ein Lagerbaugruppenmodul (1) eingebaut, am Lagergehäuse befestigt und zerstörungsfrei ausbaubar ist, wobei der Aufnahmeraum (30) derart dimensioniert ist, dass wahlweise ein Wälzlager aufweisendes Lagerbaugruppenmodul oder ein Gleitlager aufweisendes Lagerbaugruppenmodul einbaubar ist, wobei der Aufnahmeraum (30) eine Schnittstelle (30a) aufweist, die zur Kontaktierung mit dem Lagerflansch (5) des in den Aufnahmeraum eingebauten Lagerbaugruppenmoduls ausgebildet ist und wobei die Schnittstelle (30a) zur Verbindung eines durch das Lagergehäuse (29) geführten Ölkanals (29a) mit einem oder mehreren durch den Lagerflansch des Lagerbaugruppenmoduls geführten Ölkanälen ausgebildet ist, und wobei der Aufnahmeraum eine Stufe (31) aufweist, welche eine im Wesentlichen in radialer Richtung verlaufende Anschlagfläche aufweist, die zum Verdichter hin weist, so dass sie einen axialen Anschlag für ein verdichterseitig eingesetztes Lagerbaugruppenmodul definiert, und wobei die Stufe den Aufnahmeraum in einen verdichterseitigen, in Radialrichtung größeren ersten Aufnahmeraum-Abschnitt und einen turbinenseitigen, in Radialrichtung kleineren zweiten Aufnahmeraum-Abschnitt unterteilt, wobei der erste und zweite Aufnahmeraum-Abschnitt axial benachbart zueinander angeordnet sind und die Stufe zwischen dem ersten und dem zweiten Aufnahmeraum-Abschnitt angeordnet ist, und wobei der Ölkanal oder einer der Ölkanäle mit einem Ringkanal verbunden ist, der auf einer verdichterseitigen Stirnseite des Lagerbaugruppenmoduls angeordnet ist.

2. Abgasturbolader nach Anspruch 1, bei welchem die Bauform und die Außenmaße eines in den Aufnahmeraum (30) einsetzbaren oder eingesetzten, Wälzlager aufweisenden Lagerbaugruppenmoduls mit der Bauform und den Außenmaßen des in den Aufnahmeraum eingesetzten oder einsetzbaren, Gleitlager aufweisenden Lagerbaugruppenmoduls soweit übereinstimmen, dass das Wälzlager aufweisende Lagerbaugruppenmodul und das Gleitlager aufweisende Lagerbaugruppenmodul austauschbar in den Aufnahmeraum eingesetzt werden können.

3. Abgasturbolader nach Anspruch 1 oder 2, bei welchem das Lagerbaugruppenmodul (1) eine Wälzlagerkartusche (3), den Lagerflansch (5), einen Abschlussdeckel (2), ein Ölfangblech (4) und eine Verdrehsicherung aufweist, wobei die Wälzlagerkartusche (3) ein Wälzlager aufweist, zu welchem ein Außenring (6), ein Innenring (7) und zwischen dem Außenring (6) und dem Innenring (7) angeordnete Wälzkörper (8, 9, 10, 11) gehören.

4. Abgasturbolader nach Anspruch 3, bei welchem der Innenring (7) zwei Innenringteile (7a, 7b) aufweist und der turbinenseitige Außenrand des turbinenseitig angeordneten Innenringteils (7b) relativ zum turbinenseitigen Außenrand des Außenringes (6) in Axialrichtung nach außen verlängert ist.

5. Abgasturbolader nach Anspruch 3 oder 4, bei welchem das Ölfangblech (4) als axiales Gegenlager für den Innenring (7) dient und bei welchem im unverspannten Zustand ein axialer Spalt (X) zwischen dem Innenring (7) und dem Ölfangblech (4) kleiner ist als die axiale Beweglichkeit von turbinenseitigen Wälzkörpern (10, 11) des Wälzlagers in der Wälzlagerkartusche.

6. Abgasturbolader nach einem der Ansprüche 3 - 5, bei welchem das Ölfangblech (4) zwei Rippen (15, 18) aufweist und der tangentiale Rand einer dieser Rippen im Betrieb des Lagerbaugruppenmoduls als Ölhobel für eingebrachtes Kühlöl dient.

7. Abgasturbolader nach einem der Ansprüche 3 - 6, bei welchem der Durchmesser des Ölfangblechs (4) an dessen radial äußerem Rand gegenüber der Gegenfläche des Lagerflansches zur Bildung einer Ablaufrinne vergrößert ist.

8. Abgasturbolader nach einem der Ansprüche 3 - 7, bei welchem das Ölfangblech (4) am Lagerflansch (5) mittels Befestigungselementen befestigt ist und am Lagerflansch mittels dieser Befestigungselemente zentrierbar ist.

9. Abgasturbolader nach einem der Ansprüche 3 - 8, welcher eine zur Ölversorgung eines Quetschöldämpfers des Wälzlagers ausgebildete, in der Wälzlagerkartusche angeordnete Ringnut aufweist.

10. Abgasturbolader nach einem der Ansprüche 3 - 9, bei welchem der Abschlussdeckel (2) als axialer Anschlag zum Aufnehmen einer in Axialrichtung zum Verdichter hin wirkenden Schubbelastung dient.

11. Abgasturbolader nach einem der Ansprüche 3 - 10, bei welchem der Abschlussdeckel (2) aus Buntmetall besteht und/oder Aussparungen aufweist.

12. Abgasturbolader nach einem der vorhergehenden Ansprüche, bei welchem die Stufe (31) im mittleren Teil der Axialerstreckung des Aufnahmeraums (30) angeordnet ist.

13. Abgasturbolader nach einem der vorhergehenden Ansprüche, bei welchem zwischen einem turbinenseitigen Ende des Lagerbaugruppenmoduls (1) und einem turbinenseitigen Ende des Lagergehäuses (29) im Betrieb des Abgasturboladers eine Lücke (37) ist.

14. Verwendung eines Lagerbaugruppenmoduls (1) zum Lagern der Welle (27) eines Abgasturboladers (22) gemäß Anspruch 1, wobei. das Lagerbaugruppenmodul (1) in einem Satz von Lagerbaugruppenmodulen enthalten ist, wobei der Satz von Lagerbaugruppenmodulen ein Wälzlager aufweisendes Lagerbaugruppenmodul und ein Gleitlager aufweisendes Lagerbaugruppenmodul umfasst, wobei das Wälzlager aufweisende Lagerbaugruppenmodul und das Gleitlager aufweisende Lagerbaugruppenmodul in den Aufnahmeraum einbaubar und zerstörungsfrei aus dem Aufnahmeraum (30) ausbaubar sind, und
wobei das Lagerbaugruppenmodul (1) zum Lagern der Welle (27) des Abgasturboladers verwendet wird, indem es zerstörungsfrei ausbaubar in den Aufnahmeraum eingebaut wird.

15. Verfahren zum Lagern der Welle (27) eines Abgasturboladers (22) gemäß Anspruch 1, mit folgenden Schritten:
- Auswählen eines Lagerbaugruppenmoduls (1) aus einem Satz von Lagerbaugruppenmodulen, zu welchem ein Wälzlager aufweisendes Lagerbaugruppenmodul und ein Gleitlager aufweisendes Lagerbaugruppenmodul gehören, wobei das Wälzlager aufweisende Lagerbaugruppenmodul und das Gleitlager aufweisende Lagerbaugruppenmodul in den Aufnahmeraum einbaubar und zerstörungsfrei aus dem Aufnahmeraum ausbaubar sind, und
- Einbauen des ausgewählten Lagerbaugruppenmoduls in den Aufnahmeraum.

16. Verfahren nach Anspruch 15 mit folgendem weiteren Schritt:
- zerstörungsfreies Ausbauen eines in den Aufnahmeraum (30) eingebauten Lagerbaugruppenmoduls (1), wobei entweder ein Wälzlager aufweisendes Lagerbaugruppenmodul zerstörungsfrei aus dem Aufnahmeraum ausgebaut und durch ein anderes, ebenfalls Wälzlager aufweisendes Lagerbaugruppenmodul oder ein Gleitlager aufweisendes Lagerbaugruppenmodul ersetzt wird oder ein Gleitlager aufweisendes Lagerbaugruppenmodul zerstörungsfrei aus dem Aufnahmeraum ausgebaut wird und durch ein anderes, ebenfalls Gleitlager aufweisendes Lagerbaugruppenmodul oder ein Wälzlager aufweisendes Lagerbaugruppenmodul ersetzt wird.

## Claims

1. Exhaust turbocharger (22) which contains a modular bearing (28) which is arranged between a compressor (23) and a turbine (25) and is designed for bearing a shaft (27), wherein the bearing has a bearing housing (29) with a receiving chamber (30), wherein a bearing assembly module (1) is installed in the receiving chamber, is fastened to the bearing housing and can be removed without being destroyed, wherein the receiving chamber (30) is dimensioned in such a manner that either a bearing assembly module having rolling bearings or a bearing assembly module having plain bearings can be installed, wherein the receiving chamber (30) has an interface (30a) which is designed for making contact with the bearing flange (5) of the bearing assembly module installed in the receiving chamber, and wherein the interface (30a) is designed for connecting an oil duct (29a) guided through the bearing housing (29) to one or more oil ducts guided through the bearing flange of the bearing assembly module, and wherein the receiving chamber has a step (31) which has a stop surface which runs substantially in the radial direction and faces the compressor, and therefore it defines an axial stop for a bearing assembly module inserted on the compressor side, and wherein the step divides the receiving chamber into a compressor-side first receiving chamber section which is larger in the radial direction and a turbine-side second receiving chamber section which is smaller in the radial direction, wherein the first and second receiving chamber sections are arranged axially adjacent to one another and the step is arranged between the first and second receiving chamber section, and wherein the oil duct or one of the oil ducts is connected to an annular duct which is arranged on a compressor-side end side of the bearing assembly module.

2. Exhaust turbocharger according to Claim 1, in which the design and the external dimensions of a bearing assembly module which can be inserted or is inserted into the receiving chamber (30) and has rolling bearings correspond to the design and the external dimensions of the bearing assembly module which is inserted or can be inserted into the receiving chamber and has plain bearings to such an extent that the bearing assembly module having rolling bearings and the bearing assembly module having plain bearings can be inserted interchangeably into the receiving chamber.

3. Exhaust turbocharger according to Claim 1 or 2, in which the bearing assembly module (1) has a rolling bearing cartridge (3), the bearing flange (5), a closure cover (2), an oil baffle (4) and a rotation prevention means, wherein the rolling bearing cartridge (3) has a rolling bearing which includes an outer race (6), an inner race (7) and rolling bodies (8, 9, 10, 11) arranged between the outer race (6) and the inner race (7).

4. Exhaust turbocharger according to Claim 3, in which the inner race (7) has two inner race parts (7a, 7b), and the turbine-side outer edge of the inner race part (7b) arranged on the turbine side is extended outward in the axial direction relative to the turbine-side outer edge of the outer race (6).

5. Exhaust turbocharger according to Claim 3 or 4, in which the oil baffle (4) serves as an axial counter bearing for the inner race (7), and in which at zero load an axial gap (X) between the inner race (7) and the oil baffle (4) is smaller than the axial movability of turbine-side rolling bodies (10, 11) of the rolling bearing in the rolling bearing cartridge.

6. Exhaust turbocharger according to any one of Claims 3 - 5, in which the oil baffle (4) has two ribs (15, 18), and the tangential edge of one of said ribs serves as an oil windage tray for introduced cooling oil during the operation of the bearing assembly module.

7. Exhaust turbocharger according to any one of Claims 3 - 6, in which the diameter of the oil baffle (4) is enlarged at the radially outer edge thereof in relation to the counter surface of the bearing flange in order to form a drainage channel.

8. Exhaust turbocharger according to any one of Claims 3 - 7, in which the oil baffle (4) is fastened to the bearing flange (5) by means of fastening elements and can be centred on the bearing flange by means of said fastening elements.

9. Exhaust turbocharger according to any one of Claims 3 - 8 which has an annular groove which is designed for supplying oil to a squeeze oil damper of the rolling bearing and is arranged in the rolling bearing cartridge.

10. Exhaust turbocharger according to any one of Claims 3 - 9, in which the closure cover (2) serves as an axial stop for absorbing a shearing load acting in the axial direction toward the compressor.

11. Exhaust turbocharger according to any one of Claims 3 - 10, in which the closure cover (2) is composed of nonferrous metal and/or has recesses.

12. Exhaust turbocharger according to any one of the preceding claims, in which the step (31) is arranged in the central part of the axial extent of the receiving chamber (30).

13. Exhaust turbocharger according to any one of the preceding claims, in which there is a gap (37) between a turbine-side end of the bearing assembly module (1) and a turbine-side end of the bearing housing (29) during the operation of the exhaust turbocharger.

14. Use of a bearing assembly module (1) for bearing the shaft (27) of an exhaust turbocharger (22) according to Claim 1, wherein the bearing assembly module (1) is contained in a set of bearing assembly modules, wherein the set of bearing assembly modules comprises a bearing assembly module having rolling bearings and a bearing assembly module having plain bearings, wherein the bearing assembly module having rolling bearings and the bearing assembly module having plain bearings can be installed in the receiving chamber and can be removed from the receiving chamber (30) without being destroyed, and
wherein the bearing assembly module (1) is used for bearing the shaft (27) of the exhaust turbocharger by being installed in the receiving chamber so as to be removable without being destroyed.

15. Method for bearing the shaft (27) of an exhaust turbocharger (22) according to Claim 1, with the following steps:
- selecting a bearing assembly module (1) from a set of bearing assembly modules, which includes a bearing assembly module having rolling bearings and a bearing assembly module having plain bearings, wherein the bearing assembly module having rolling bearings and the bearing assembly module having plain bearings can be installed in the receiving chamber and can be removed from the receiving chamber without being destroyed, and
- installing the selected bearing assembly module in the receiving chamber.

16. Method according to Claim 15 with the following further step:
- removing without destruction a bearing assembly module (1) installed in the receiving chamber (30), wherein either a bearing assembly module having rolling bearings is removed from the receiving chamber without being destroyed and is replaced by another bearing assembly module likewise having rolling bearings or by a bearing assembly module having plain bearings, or a bearing assembly module having plain bearings is removed from the receiving chamber without being destroyed and is replaced by another bearing assembly module likewise having plain bearings or by a bearing assembly module having rolling bearings.

## Revendications

1. Turbocompresseur de gaz d'échappement (22), qui contient un palier modulaire (28) agencé entre un compresseur (23) et une turbine (25), réalisé pour supporter un arbre (27), le palier présentant un boîtier de palier (29) avec un espace de réception (30), un module de groupe de palier (1) étant monté dans l'espace de réception, fixé au boîtier de palier et démontable sans destruction, l'espace de réception (30) étant dimensionné de telle sorte qu'un module de groupe de palier présentant un palier à roulement ou un module de groupe de palier présentant un palier lisse peut être monté au choix, l'espace de réception (30) présentant une interface (30a) réalisée pour entrer en contact avec la bride de palier (5) du module de groupe de palier monté dans l'espace de réception, et l'interface (30a) étant réalisée pour relier un canal d'huile (29a) traversant le boîtier de palier (29) à un ou plusieurs canaux d'huile traversant la bride de palier du module de groupe de palier, et l'espace de réception présentant un gradin (31) qui présente une surface de butée s'étendant essentiellement dans la direction radiale, qui est orientée vers le compresseur, de manière à définir une butée axiale pour un module de groupe de palier inséré côté compresseur, et le gradin divisant l'espace de réception en une première section d'espace de réception côté compresseur, plus grande dans la direction radiale, et une deuxième section d'espace de réception côté turbine, plus petite dans la direction radiale, la première et la deuxième section d'espace de réception étant agencées de manière axialement voisine l'une de l'autre et le gradin étant agencé entre la première et la deuxième section d'espace de réception, et le canal d'huile ou l'un des canaux d'huile étant relié à un canal annulaire qui est agencé sur un côté frontal côté compresseur du module de groupe de palier.

2. Turbocompresseur de gaz d'échappement selon la revendication 1, dans lequel la forme et les dimensions extérieures d'un module de groupe de palier présentant un palier à roulement, pouvant être inséré ou inséré dans l'espace de réception (30), coïncident avec la forme et les dimensions extérieures du module de groupe de palier présentant un palier lisse, pouvant être inséré ou inséré dans l'espace de réception, de telle sorte que le module de groupe de palier présentant un palier à roulement et le module de groupe de palier présentant un palier lisse puissent être insérés de manière interchangeable dans l'espace de réception.

3. Turbocompresseur de gaz d'échappement selon la revendication 1 ou 2, dans lequel le module de groupe de palier (1) présente une cartouche de palier à roulement (3), la bride de palier (5), un couvercle de fermeture (2), une tôle récupératrice d'huile (4) et une sécurité anti-rotation, la cartouche de palier à roulement (3) présentant un palier à roulement qui comprend une bague extérieure (6), une bague intérieure (7) et des corps de roulement (8, 9, 10, 11) agencés entre la bague extérieure (6) et la bague intérieure (7).

4. Turbocompresseur de gaz d'échappement selon la revendication 3, dans lequel la bague intérieure (7) présente deux parties de bague intérieure (7a, 7b) et le bord extérieur côté turbine de la partie de bague intérieure (7b) agencée côté turbine est prolongé vers l'extérieur dans la direction axiale par rapport au bord extérieur côté turbine de la bague extérieure (6).

5. Turbocompresseur de gaz d'échappement selon la revendication 3 ou 4, dans lequel la tôle récupératrice d'huile (4) sert de contre-palier axial pour la bague intérieure (7) et dans lequel, à l'état non serré, un interstice axial (X) entre la bague intérieure (7) et la tôle récupératrice d'huile (4) est inférieur à la mobilité axiale de corps de roulement côté turbine (10, 11) du palier à roulement dans la cartouche de palier à roulement.

6. Turbocompresseur de gaz d'échappement selon l'une quelconque des revendications 3 à 5, dans lequel la tôle récupératrice d'huile (4) présente deux nervures (15, 18) et le bord tangentiel de l'une de ces nervures sert, pendant le fonctionnement du module de groupe de palier, de racleur d'huile pour l'huile de refroidissement introduite.

7. Turbocompresseur de gaz d'échappement selon l'une quelconque des revendications 3 à 6, dans lequel le diamètre de la tôle récupératrice d'huile (4) est agrandi au niveau de son bord radialement extérieur par rapport à la surface opposée de la bride de palier afin de former une goulotte d'écoulement.

8. Turbocompresseur de gaz d'échappement selon l'une quelconque des revendications 3 à 7, dans lequel la tôle récupératrice d'huile (4) est fixée à la bride de palier (5) au moyen d'éléments de fixation et peut être centrée sur la bride de palier au moyen de ces éléments de fixation.

9. Turbocompresseur de gaz d'échappement selon l'une quelconque des revendications 3 à 8, qui présente une rainure annulaire agencée dans la cartouche de palier à roulement, réalisée pour l'alimentation en huile d'un amortisseur à huile comprimée du palier à roulement.

10. Turbocompresseur de gaz d'échappement selon l'une quelconque des revendications 3 à 9, dans lequel le couvercle de fermeture (2) sert de butée axiale pour absorber une charge de poussée agissant dans la direction axiale vers le compresseur.

11. Turbocompresseur de gaz d'échappement selon l'une quelconque des revendications 3 à 10, dans lequel le couvercle de fermeture (2) est constitué de métal non ferreux et/ou présente des évidements.

12. Turbocompresseur de gaz d'échappement selon l'une quelconque des revendications précédentes, dans lequel le gradin (31) est agencé dans la partie centrale de l'extension axiale de l'espace de réception (30).

13. Turbocompresseur de gaz d'échappement selon l'une quelconque des revendications précédentes, dans lequel il existe un espace (37) entre une extrémité côté turbine du module de groupe de palier (1) et une extrémité côté turbine du boîtier de palier (29) pendant le fonctionnement du turbocompresseur de gaz d'échappement.

14. Utilisation d'un module de groupe de palier (1) pour supporter l'arbre (27) d'un turbocompresseur de gaz d'échappement (22) selon la revendication 1, le module de groupe de palier (1) étant contenu dans un ensemble de modules de groupe de palier, l'ensemble de modules de groupe de palier comprenant un module de groupe de palier présentant un palier à roulement et un module de groupe de palier présentant un palier lisse, le module de groupe de palier présentant un palier à roulement et le module de groupe de palier présentant un palier lisse pouvant être montés dans l'espace de réception et démontés de l'espace de réception (30) sans destruction, et
le module de groupe de palier (1) étant utilisé pour supporter l'arbre (27) du turbocompresseur de gaz d'échappement en étant monté dans l'espace de réception de manière à pouvoir être démonté sans destruction.

15. Procédé pour supporter l'arbre (27) d'un turbocompresseur de gaz d'échappement (22) selon la revendication 1, avec les étapes suivantes :
- la sélection d'un module de groupe de palier (1) parmi un ensemble de modules de groupe de palier, auquel appartiennent un module de groupe de palier présentant un palier à roulement et un module de groupe de palier présentant un palier lisse, le module de groupe de palier présentant un palier à roulement et le module de groupe de palier présentant un palier lisse pouvant être montés dans l'espace de réception et démontés de l'espace de réception sans destruction, et
- le montage du module de groupe de palier sélectionné dans l'espace de réception.

16. Procédé selon la revendication 15, avec en outre l'étape suivante :
- le démontage sans destruction d'un module de groupe de palier (1) monté dans l'espace de réception (30), soit un module de groupe de palier présentant un palier à roulement étant démonté sans destruction de l'espace de réception et remplacé par un autre module de groupe de palier présentant également un palier à roulement ou un module de groupe de palier présentant un palier lisse, soit un module de groupe de palier présentant un palier lisse étant démonté sans destruction de l'espace de réception et remplacé par un autre module de groupe de palier présentant également un palier lisse ou un module de groupe de palier présentant un palier à roulement.
